# EUROPEAN PATENT APPLICATION

(11) **EP 1 752 885 A1**
(43) Date of publication of application: **14.02.2007**
(21) Application number: 05076642.7
(22) Date of filing: 18.07.2005
(51) Int. Cl.: G06F 17/21

(54) **Pre-processing unit for documents to be printed, system including such a pre-processing unit, and method for pre-processing documents**

(71) Applicant: Neopost S.A., 92220 Bagneux (FR)
(72) Inventor: Wiersma, Jelle, 9222 LB Drachtster Compagnie (NL); Scheltes, René, 9203 VD Drachten (NL)
(74) Representative: Winckels, Johannes Hubertus F.

(57) **Abstract**

A document pre-processing unit for pre-processing documents to be printed. The unit has a processor input for receiving document data at least representing content and, optionally, lay-out instructions of at least one document. A computing unit is connected to the processor input, for computing a number of sheets a physical document would include if printed in accordance with the document data. In a memory threshold information can be stored. A comparing unit is connected to the computing unit and the memory, for outputting a modify signal if the computed number exceeds a threshold determined from the threshold information. A data modifying unit is connected to the comparing unit, for reducing the computed number of sheets below the threshold by modifying the document data in response to the modify signal. A processor output is connected to the data modifying unit for outputting the modified document data.

## Description

### FIELD AND BACKGROUND OF THE INVENTION

The invention relates to a document pre-processing unit for pre-processing documents to be printed. The invention further relates to a method for pre-processing documents. The invention also relates to a system for generating mail items. Furthermore, the invention relates to a data carrier and to a document printed on sheets. The invention also relates to a computer program product.

In the art, a system for generating mail items is known. The system includes an input for receiving a print stream of printing data which contains printing instructions. The system further has a printer which can print a document on sheet in accordance with the printing instructions. The system has an inserter which, in a processing direction of the documents, is placed downstream of the printer. Between the printer and inserter further processing may take place. The inserter can assemble the printed document and additional documents into mail items. The mail items can be sent to a franking machine for applying a franking value, such as an electronic or printed post stamp, to the mail item. The required franking value is dependent on a property of the mail item.

Typically, franking tariffs are determined per class of mail items. Thus, mail items have to be franked with the same franking value when a certain property, such as weight or size, is within a certain range. However, when the property of the mail items exceeds the lower limit of the range with only a small amount, the franking value is relatively high compared a mail item of which the property is close to the upper limit of the range.

### SUMMARY OF THE INVENTION

It is a goal of the invention to provide a pre-processing unit which can reduce the amount of costs involved in franking mail items. Therefore, a pre-processing unit according to claim 1 is provided.

Such a pre-processing unit reduces the cost involved in franking mail items, because the data modifying unit reduces the number of sheets required by the printed document in response to the modify signal, by modifying the document data. Accordingly, after modifying, the printed document, or a mail item including the printed document may fall in a class with lower franking costs than a printed document according to the document data before modification would have. Thus, the franking costs can be reduced. Although the reduction of the franking costs per mail item may be regarded as relatively small, the overall reduction of franking costs can be significant, since a large amount of mail items may be generated by the system.

The invention further provides a method for pre-processing documents according to claim 15. The invention also provides a data carrier according to claim 16. Furthermore, the invention provides a document according to claim 17. The invention also provides a system for generating mail items according to claim 18. The invention further provides a computer program product according to claim 20.

Specific embodiments of the invention are set forth in the dependent claims.

### BRIEF DESCRIPTION OF THE DRAWINGS

Further details, aspects and embodiments of the invention will be described, by way of example only, with reference to the attached drawings.
Fig. 1 schematically shows a flow-chart of an example of a method according to the invention
Fig. 2 schematically shows a block diagram of an example of an embodiment of a system for generating mail items according to the invention.
Fig. 3 schematically shows a block diagram of an example of an embodiment of a pre-processing unit according to the invention.
Fig. 4 schematically shows a block diagram of an example of an embodiment of a comparing unit according to the invention.

### DETAILED DESCRIPTION

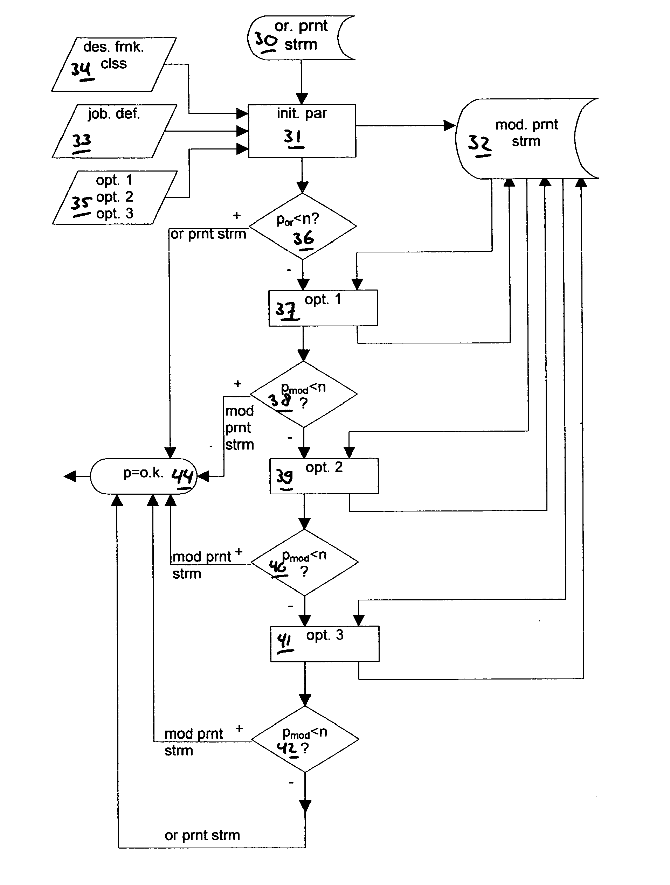

The flow-chart of fig. 1 schematically illustrates an example of a method of pre-processing documents to be printed. Initially, an original print stream (or. prnt. strm) or other original document data is received or generated in receiving step 30. The document data may be generated with a document generator, such as a word processor running on a personal computer or another suitable document generator. The received document data at least defines a content of at least one document (e.g. the text thereof). The received document data may further define the lay-out of the document. For instance, the document data may define a font of the text, a font size, page sizes, page margin, etc. For example, the document data may include code portions corresponding to the following pseudo-code:
**pagesize:** A4 (defining the size of the page on which the document will beprinted)
**font**: arial (defining the type of font)
**font size**: 11 pt (defining the size of the font)
**text position**: 11,11 (defining the position on the page at which the text starts)
**text**: aaabbbbccc

The code portion 'text' thus defines content of the document, whereas the other code portions define the lay-out of the document.

In an initialisation step 31, the parameters of the method are set, and a copy of the received document data is stored in a memory 32. In the initialisation step 31, furthermore a job definition 33 is received, which defines the processing to be performed with the document after the document has been printed, e.g. the number of annexes, the envelop size, type of folds etc. The received document data may for example be a document in Personalized Print Markup Language (PPML) or any other suitable type of document.

In the initialisation step 31, for example a desired postal tariff or franking class (de. frnk.clss) may be selected from a memory 34 in which two or more franking classes are stored. The desired franking class may e.g. be selected manually by an operator or be selected automatically based on a pre-determined selection criterion. For example, the desired franking class may be selected depending on the paper size a printed document would have. Also, for example, a maximum amount of franking costs per mail item or a maximum total amount of franking costs for a batch of mail items may be set, and the postal tariff class may be selected such that the maximum amount is not exceeded.

In the initialisation step 31, also a set of types of modifications may be selected from a list 35 of possible types of modifications. These types of modifications may for example include lay-out modifications or documents content modifications.

The lay-out modification may for example include one or more of the following. For instance, the size on which the document is to be printed may be changed, e.g. from A4 to A5 or otherwise. To that end, for example, the document data may be search for code portions defining the page size, for instance in the example above **'pagesize'.** The parameters following that code portions may then be modified to reduce the pagesize. Furthermore, other aspects of the document may be modified to fit the document onto the reduced page size, such as e.g. the font-type or the font-size. Thereto, for example, the document data may be searched for code portions defining those aspects, e.g. in the example above 'font' and 'fontsize'. Also, for example, the document to be printed may be converted from simplex to duplex (i.e. printing on both sides instead of a single side of a sheet). Furthermore, the font size and/or font type and/or character and/or line spacing and /or margins of the document may be modified, as described before. Furthermore, it could be selected that pictures in the document may be reduced in size. However, other types of modifications to the lay-out may be included in the list.

The modifications to the content may for example include that, in order to reduce the number of pages of the document, pictures are removed or that certain parts of the text are removed. The modifications to the content may further include that one more annexes are omitted to satisfy the requirements of the desired postal tariff class.

In addition to selecting types of modifications that can be applied to the received document data, in initialisation step 31, an order of preference may be provided to the selected types of modifications. The order may for example be determined by the effect on the printed document. E.g. it can be specified that types of modifications that only affect the lay-out of the document, and not the content of the document, are to be performed first. In the successive stages of the method, types of modifications may then be applied in the specified order of preference.

For example, it may be specified that first a type of simplex to duplex conversion is to be performed. Thereafter, a modification in which enclosures are omitted may be performed, and then a type in which the font or pictures are reduced in size. After these changes to the lay-out of the document, types of operations which affect the content of the document can be listed in the order. For example, types in which pictures are be removed or in which marked parts of the text of the text can be removed.

The pre-processing shown in fig. 1 further includes a comparing step 32 after the initialisation step 31. In the comparing step, one or more properties a physical document would have if printed in accordance with the received document data are compared with the requirements of the desired postal tariff class. For example in the comparing step the number of sheets this 'virtual' physical document would have may be determined and compared with the requirements of the desired franking class. Typically, franking classes are defined in terms of dimensions of a postal item, and contain subclasses defined in terms of weight ranges.

In the following it is supposed for sake of simplicity that franking classes are defined in terms of weight ranges. However, the virtual physical document may likewise be compared with other requirements of the desired franking class that can be related to an amount of sheets.

For example, using an average weight of a sheet, the required weight range may be converted into a range of sheets. In comparing step 32, the amount of sheets pₒᵣ the physical document would have if printed in accordance with the received document data are compared with a threshold value n. The amount of sheets pₒᵣ may for example be determined by a printer during the processing of the print stream or in any other suitable manner. In this respect, it should be noted that it is generally known in the field of printers to determine the amount of pages in order to print a document correctly, i.e. in accordance with the lay-out defined in the print steam, and for the sake of brevity this is not described in further detail. In this example the threshold value n is the upper limit of the number of sheets in the desired mail class. In case the amount of sheets pₒᵣ is below the threshold value n, the physical document will be within the desired franking class if the physical document would be printed in accordance with the original print stream, and no further modifications are required. The original print stream is then outputted in output step 44.

E.g. supposing that a desired mail class is a franking subclass which is applicable in case the weight of a mail piece is between 80 and 100 grams, and the average weight of a sheet of paper with size A4 (21 cm by 29.7 cm) is about 5 grams, the number of sheets required for this subclass is between 20 (80/5) and 25 (100/5). The threshold value n may then be set to e.g. 25 sheets. In such case, e.g., when the amount of sheets pₒᵣ is lower than 25, the original print stream may be outputted.

In case the computed number of sheets of the physical document exceeds the threshold value n, a modifying operation 37 is initiated. E.g. when the amount of sheets pₒᵣ exceeds the upper limit of the range of sheets in the desired franking class, a modifying operation 37 of the original print stream data is initiated.

In the modifying operation 37, a type of modifying operation which is first in the order of preference of the selected types of modifications is performed. e.g. an operation of the type 'opt 1' in fig. 1. In the modifying operation 37 the print stream data stored in the memory 32 is retrieved. The retrieved print stream data are modified resulting in a modified print stream data. The modified print stream data is stored in the memory 32. In the modifying operation, the number of sheets required by the printed document is reduced. To that end, e.g., the modifying operation 37 may change the way in which the document is printed from simplex to duplex.

After modifying the print stream data, a second comparing step 38 is performed on the modified print stream data. This comparing step may be similar to the comparing step 36 performed on the original print stream data or may be another suitable type of comparing step. In the comparing step 38, a calculated number p_{mod} of sheets is determined a physical document would have if printed in accordance with the modified print stream data. When the comparing step reveals that the calculated number p_{mod} is below or equal to the threshold number n, the modified print stream is outputted in output step 44. In case the calculated number p_{mod} is above the threshold number n, a successive modifying step 39 is performed in accordance with a next type of operation on the list, e.g. opt 2.

After the successive modifying step 39, the modified data is stored in the memory 32, and a number of pages p_{mod} is determined from the modified print stream data and compared with the threshold n. If the number of pages p_{mod} is below or equal to the threshold then the modified data is outputted in output step 44, else a modifying operation 41 is performed of a type which is next in the order of selected types, e.g. of type opt. 3. After this operation, the modified print stream data is stored in the memory 32, and the number of sheets p_{mod} is compared with the threshold n. The original print stream data is outputted in the output step 44.

In the modifying operation any operation suitable for reducing the franking tarif may be used. The operation may for example be of a type which reduces the number of sheets or the page size. For example, the received document data may be a print stream contains a reference to an image to be included in the printed document, as well as a definition of the space occupied by the image. During modification, the reference may be removed, and the space occupied may be filled with text using a suitable print stream reengineering process. For instance in case the print stream contains a PPML document, a reference to resources, e.g. images may be included in the PPML document, by means of an URL (Universal Resource Locator) which indicates an address of the resources in a computer network. The PPML document may then be adjusted by removing the URL, and subsequently the amount of space, and hence the number of sheets is reduced that a physical document would have if printed in accordance with the PPML document.

Furthermore, for instance, during modification, a command recognisable by the printer, e.g. a PCL (Printer Command Language) command, may be added to the print stream in response to which the printer will continue printing on a backside of a sheet after having printed the front side of the sheet.

Also in the document code, the size of the sheet on which the document is to be printed may be adjusted. For example, the document code may contain, in pseudo-code, a command **'pagesize**=A4', and during the modifying operation this may be changed into 'pagesize=A5'

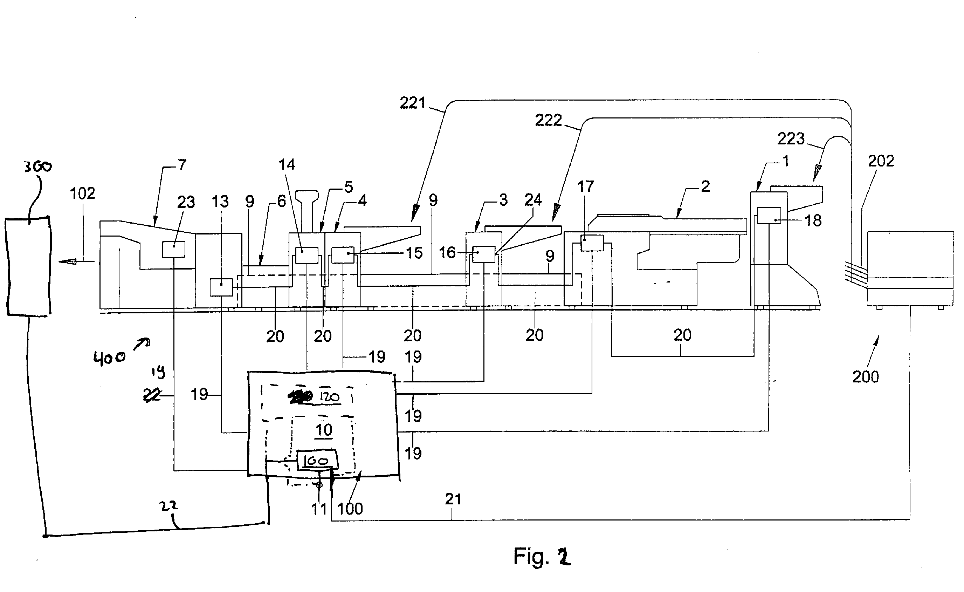

Fig. 2 schematically illustrates an example of an embodiment of a system for generating mail items. The system 100 may e.g. perform a method according to the invention. The shown system 100 includes a printer 200 for printing the document in accordance with the modified document data.

A mail piece assembler 400 is positioned in a processing direction of the at least one document downstream of the printer 200. The mail piece assembler 400 can receive the printed document, as schematically indicated with arrows 221-223. The mail piece assembler 400 can assemble the printed document, and optionally additional documents into a mail item, as will be explained below in more detail. A franking unit 300 is positioned downstream of the mail piece assembler, for franking the mail item with a franking value. Upstream of the printer 200, the system may further include a document generator for generating the document data and providing the document data to the printer 200.

The mail piece assembler 400 includes a number of successive processing stations 1-7. The processing stations are in a processing direction of the documents, and in that order: a supply station 1 for supplying separates sheets, a collecting station 2, a first and second supplement supply station 3 and 4, a folding station 5, a transport unit 6 and an inserter station 7.

The mechanical components of the shown assembler 400 may for example be implemented as stations which substantially resemble the construction of stations sold by the applicant under the name "SI-92". It should, however, be noted that many other arrangements of processing stations can be used, and the invention is not limited to the shown example. In particular, depending on the desired end product, processing stations may be added or removed. Furthermore, the position of one or more of the processing stations in the processing direction may be changed. For example, the supplement supply stations 3 and 4 may be replaced by another type of station. It is also possible to replace the supply station 1 and the collecting station 2 with a single station or to make other adjustments to the arrangement.

In the example, the supply station 1 is constructed to supply separate sheets to the collecting station 2. In the collecting station 2, the sheets received from the supply station 1 may optionally be collected to stacks of sheets, each of which, for example, may form a set of documents to be formed into a single mail piece. The sheets or stacks of sheets can subsequently be passed through supplement-supply stations 3 and 4, during which, if desired, supplements are added to the sheets or the stacks of sheets. In the folding station the sheets and optional supplements are folded. When the sheets and supplements have been collected in a stack, the sheets and supplements are folded together, i.e. as a stack. The transport unit 6 includes a transport track 9, to which the inserter-station 7, the folding station 5, the supplement-supply stations 3, 4 and the collecting station 2 are mounted.

The example shown in fig. 2 further includes a central control unit 10 and a number of station control units 13-18. Each of the station control units 13-18 is connected to one of the stations 1-7. The station control units 13-18 are connected to the central control unit by means of data communication connections 19. The central control unit 10 may send control commands to the respective station control units, via the data communication connection 19. Based on the received control commands, the respective station control unit 13-18 control the operation of the respective station 1-7. In fig. 2, the central control unit is further connected to the printer 200 and the franking machine 300 via data communication connections 21 and 22.

The station control units 13-18 are further mutually connected by means of a module communication connection. Via which the station control units 13-18 next to each other can exchange information, for example that a sheet is presented by a station to a station further down in the processing direction.

The control unit 10 includes a processing control unit 120, which controls the processing of documents by the printer 200, mail piece assembler 400 and franking unit 300 based on a processing instruction received at a data input 11 of the central control unit 10. The central control unit 10 further includes a document pre-processing unit 100, connected to the data input 11, the printer 200 and the franking unit 300. The pre-processing unit 100 is able to pre-process the documents to be printed. In this example, the control unit is connected to the printer, the mail piece assembler and the franking unit. However, the printer and/or the franking unit may also be stand-alone with respect to the mail piece assembler and not be controlled by the control unit 10.

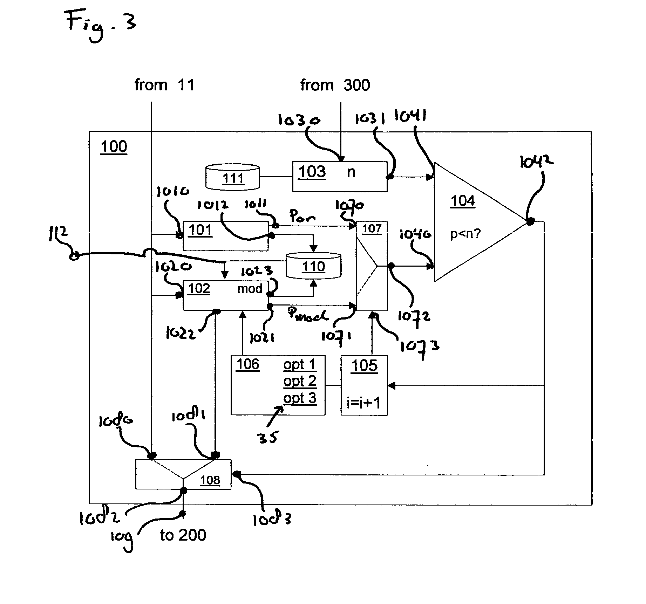

Referring to fig. 3, the pre-processing unit 100 is connected with a processor input to the data input 11 for receiving document data at least representing content and, optionally, lay-out instructions of at least one document. The processor input 11 is connected to an input 1010 of a computing unit 101. The processor input 11 is also connected to an input 1020 of a data modifying unit 102, and to an output selector 108 via selector input 1080.

The document data define at least a content of a document to be printed. The document data may for example contain instructions readably by the printer 200, which instruction define the content and the make-up or lay-out of a document. Such document data may also be referred to as a print stream For example, the document data may be generated by a computer system on which a word processor is running, and generated by the word processor in response to a print signal provided by a user of the computer system. The computing unit 101 can receive the document data and compute a number pₒᵣ of sheets a physical document would include if printed in accordance with the received document data. The data modifying unit 102 is able to modify the received document data in order to reduce the computed number of sheets. The data modifying unit 102 further computes a number p_{mod} of sheets a physical document would include if printed in accordance with the modified document data, for example in a manner as has been explained before with respect to the amount of sheets pₒᵣ in the original document data.

Both the computing unit 101 and the data modifying unit 102 are connected to a comparator 104 via a selector 107. A selector input 1070 of the selector 107 is connected to an output 1011 of the computing unit 101. At this output of the computing unit 101, in operation, data representing the number pₒᵣ is presented. Another selector input 1071 is connected to an output 1021 of the data modifying unit 102 at which in operation data representing the number p_{mod} is presented. The selector 107 has a selector output 1072 which is connected to a selected selector input depending on the state of the selector 107. Initially, in a first state of the selector 107, the selector input 1070 connected to the computing unit 101 is selected and in a second state the selector input 1071 connected to the computing unit 102 is selected. Thus, depending on the state of the selector 107, either the number pₒᵣ or the number p_{mod} is presented at the selector output 1071.

The selector output 1072 is connected to a data input 1040 of the comparator 104. At the data input 1040, depending on the state of the selector 107, either the number pₒᵣ or the number p_{mod} is presented to the comparator 104. A threshold input 1041 of the comparator 104 is connected to an output 1031 of a threshold selector 103. At the threshold input 1041, a threshold value n determined by the threshold selector 103 is presented.

In this example, an input 1030 of the threshold selector 103 is connected to the franking unit 300 and receives franking information from the franking unit 300. The threshold selector 103 stores the received franking information in a memory 111 as threshold information. Based on the threshold information, the threshold selector 103 determines a threshold value n. The threshold selector 103 may for example store in the memory 111 an upper limit of a desired franking class, which has been sent by the franking unit 300. From the stored upper limit, the threshold selector 103 may then determine the threshold value n of the number of sheets, for example as described before with reference to fig. 1. However, the threshold selector 103 may also be of a more complex design and, e.g. receive from the franking unit 300 tariff information (also referred to as tariff information), select a desired franking class from the tariff information (and optionally from the document data) and derive a threshold from the desired franking class. Also, the threshold selector 103 may for example be connected to a man-machine interface, in order to receive a desired threshold value inputted by an operator of the arrangement.

The comparator 104 compares the number pₒᵣ or p_{mod} presented at the data input 1040 with the threshold value n presented at the threshold input 1041. When the number presented at the data input 1040 exceeds the threshold value n, the comparator 104 outputs a modify signal which activates the data modifying unit 102 to modify the document data, as will be explained below. In case the number is lower or equal to the threshold value n, the comparator 104 outputs a ready signal, which results in either the received document data or the modified document data being outputted at an output 109 of the pre-processing unit 10.

The output of the comparator 104 is connected to a counter 105. In response to the modify signal, the counter value of the counter 105 is incremented. In this example, the counter value is an integer which is incremented by one each time the comparator 104 outputs the modify signal. In case the comparator 104 outputs the ready signal, the counter is set to its initial value, e.g. zero.

An output of the counter 105 is connected to a selector control input 1073 of the selector 107. When the value of counter 105 has its initial value, at the selector control input 1073 a control signal is presented, which puts the selector 107 in its first state. Thus, if the counter 105 has its initial value, e.g. zero, the number pₒᵣ is outputted at the selector 107 and compared with the threshold value n. When the value of the counter 105 differs from the initial value, e.g. the value is higher than zero, a control signal is presented by the counter 105 at the selector control input 1073 which brings the selector 107 in its second state. Thus, if the counter 105 does not have its initial value, the number p_{mod} is outputted at the selector output and compared with the threshold value n.

The counter 105 is further connected to a modification memory 106, in which a list 35 of possible types of modifications is stored. These types of modifications (represented by 'opt 1', 'opt 2' and 'opt 3' in fig. 3), may for example include lay-out modifications or modifications to the content of the document, as has been explained with reference to fig. 1. Depending on the value of the counter 105 a type is selected from the modification memory 106. The list may be ordered in accordance with the preferred order in which types of modifications are performed on the document data, as explained before. The selected type of modification is outputted from the memory 106 to the data modifying unit 102, which performs an operation corresponding to the selected type.

After the modifying operation, the data modifying unit 102 determines the number of pages p_{mod} a document would have if printed in accordance with the modified document data, and outputs data which represents the number p_{mod} to the selector 107. Via the selector 107, the number p_{mod} is presented to the input 1040 of the comparator 104 and compared with the threshold number n. When the number p_{mod} is below the threshold number n, the comparator outputs the ready signal to the counter 105.

The output 1042 of the comparator 104 is further connected to a control input 1083 of the output selector 108. The output selector 108 has a first input 1080 connected to the input of the pre-processing unit 100. A second input 1081 of the output selector 108 is connected to a data output 1022 of the data modifying unit 102. At the data output 1022, the modified document data is presented.

When the comparator 104 determines that the number inputted at the data input of the comparator 104 is below the threshold value n, the comparator 104 further outputs a print stream output signal to the output selector 108. In response to the print stream output signal, the output selector 108 selects the type of print stream data to be outputted at a pre-pre-processor output 109, while as long as the comparator 104 does not output the print stream output signal, the output selector 108 inhibits outputting of print stream data by the pre-processing unit 102. In this example, the output selector selects the input 1080 connected to the data input 11 of the central control unit 10 when the number pₒᵣ is below the threshold value n. When the number p_{mod} is below the threshold value n, the output selector 108 selects the input 1091 connected to the data modifying unit 102.

The pre-processing unit 100 further has a pre-processor output 109. The pre-processor output 109 is connected to an output 1082 of the output selector 108. At the pre-processor output 109 the print stream data selected by the output selector 108 is outputted. Thus, when the number pₒᵣ is below the threshold value n, the original document data is outputted by the pre-processing unit 100. When the number pₒᵣ is above the threshold value n, the modified document data is outputted if the number p_{mod} is below the threshold value n.

In the example of fig. 3, the threshold selector 103 and the comparator 104 together form a comparing unit for outputting a modify signal if the computed number exceeds a threshold determined from the threshold information. However, the comparing unit may be implemented in a different manner than shown in fig. 3.

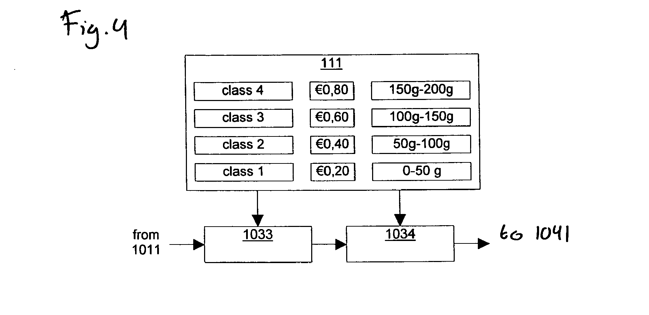

Fig. 4 for example shows a comparing unit which includes a tariff determining unit 1033. The tariff determining unit 1033 is connected to the output 1011 of the computing unit 101 and to the memory 111. In the memory 111 tariff information may be stored which represents at least two postal tariff classes. Based on the number pₒᵣ the tariff determining unit 1033 determines a postal tariff that would apply to a postal item with a physical document in case the physical document is printed in accordance with the received, original document data.

For example, based on the calculated number pₒᵣ of sheets (and optionally additional information, such as weight of supplemental documents, envelop size etc.) the tariff determining unit 1033 may calculate the weight of the physical document and the postal item, and compare this with tariff information stored in the memory 111. For example, in the memory 111 class definitions 'class 1', 'class 2', 'class 3' and 'class 4' may be stored, which define the weight range for each separate tariff class. The tariff determining unit 1033 is connected to a tariff selecting unit 1034.

The tariff selecting unit 1034 is arranged to select a desired tariff class from the memory 111 based on a selection criterion. The selection criterion may for instance be based on at least a lower limit of a parameter range of mail items classified in the current postal tariff class and on an upper limit of a parameter range, such as a range of weights or sizes, of mail items classified in the desired postal class. For example, in case the value of the relevant property of the postal item, e.g. the calculated weight, is close to the lower limit of the current tariff class, the tariff selector 1034 can select a tariff class of which the upper limit is the lower limit of the current tariff class. For example, in case the calculated weight is 60 g, and the tariff class 'class 2' is applicable in case the weight is in the range between 50 g and 100 g, the tariff selector 1034 could select tariff class 'class 1'with weight in the range between 0 g and 50 g, and set the threshold value n to the amount of sheets that has a total weight of 50 g.

In this example, the tariff determining unit 1033 transmits data to the tariff selecting unit 1034 which represents the determined current tariff class. In response to this data, the tariff selecting unit 1034 determines if the current tariff class is to be selected as desired tariff class or that another tariff class stored in the memory 111 is to be selected. However, the tariff selecting unit 1034 may be implemented in any manner suitable. For example, the tariff selecting unit 1034 may be implemented to receive from the tariff determining unit the current tariff class for each document in a batch of documents, and determine which tariff class applies as an average, and select this tariff class or select the tariff class in any other suitable manner. For example, the memory 111 may contain information about the costs of franking for at least two of the postal tariff classes, and the tariff selecting unit 1034 may be arranged to select a desired postal tariff class which has lower franking cost than the current franking class.

The tariff selecting unit 1034 may further be arranged to receive a desired postal tariff class, e.g. inputted by an operator at a man-machine interface, and to select between the current postal tariff class and the desired postal tariff class using a selection criterion based on the computed number of sheets. For example, the tariff selecting unit may select a desired tariff class for a number of documents, e.g. a batch of document. The tariff selecting unit 1034 may then be selected to determine the difference between an upper limit of the desired postal tariff class and the calculated property of the postal item for each document in the batch. In case this difference is too large for a certain document, the tariff selecting unit 1034 may be arranged to select the current tariff class, and set the threshold value n accordingly.

In the shown example, at the threshold input of the comparator 104, a threshold value n representing a certain number of sheets is presented. However, the comparator may include a converter for converting a parameter value of at least the desired postal tariff classes to a threshold number of sheets. For example, at the threshold input 1041 of the comparator 104 data representing a weight, e.g. the upper limit of a postal class may be presented, and the comparator may be arranged to convert the weight into a number of sheets.

In the examples, the threshold value n is determined from threshold information representing tariff information of franking costs. However, the threshold information may also be other information, such as an upper limit of the amount of sheets the mail piece assembler is able to process. For instance, the threshold may be based on an upper limit of the amount of sheets an inserter station is able to process or the maximum amount of sheets that can be folded by a folding station.

The document data may include information about preferred types of sheet-reducing modification. The information may include at least one indication of at least one part of the document content to be preferentially modified or removed in response to the modify signal. For instance, in case the document data is in a markup language, such as PPML, the parts of the contents that may be removed may be placed between markers. For example, using pseudo-code, the document data may contain a marker **<removable section>** which indicates the start of the removable content and a marker **</removable section>** which indicates the end of the removable content. The content, for example the text, between these two markers may then be removed in order to reduce the amount of sheets.

In the example of fig. 3, the computing unit 101 and the data modifying unit 102 are further connected with respective outputs 1012,1021 to a document data memory 110. In the document data memory 110, information about the document data is stored. In this example, the computing unit 101 stores the received or original document data in the memory 110. After each modifying step, the data modifying unit 102 stores the modified document data in the document data memory 110, as well as information about the performed type of modifying operation. For a successive modifying operation, the data modifying unit 102 retrieves the latest stored modified document data from the document data memory 110 and modifies the retrieved data. Thus, information about the modifications on the document data is stored in the memory 110, allowing a tracing of the modifications. To inform an operator of the pre-processing unit 100, the memory 110 may be connected to a feedback output 112. Via the feedback output 112, feedback data containing information about the modifications to the document data by the data modifying unit can be feedback to a source of the received document data. For example, to a user of the system, information may thus be provided about the modifications to a document generated by the user.

After outputting at the pre-processor output 109, the original or modified document data outputted in step 44 may be used to print physical documents in accordance with the document data. For instance in fig. 2, the pre-processor output 109 may be connected to the printer 200 to output the document data and print one or more documents in accordance with the document data. Thereafter, the printed documents may be assembled into mail pieces by the mail piece assembler 400 and be provided with a postage value by the franking unit 300.

The invention is not limited to implementation in the disclosed examples of devices, but can likewise be applied in other devices. In particular, the invention is not limited to physical devices or units implemented in non-programmable hardware but can also be applied in programmable devices or units able to perform the desired device functions by operating in accordance with suitable program code. Furthermore, the devices may be physically distributed over a number of apparatuses, while logically regarded as a single device. For example, the central control unit 10 of the example of fig. 2 may be implemented as a plurality of separate processors arranged to perform in combination the functions of the central control unit 10. Also, devices logically regarded as separate devices may be integrated in a single physical device. For example, the devices or units 101-109 of the system 100 shown in fig. 3 can be implemented in a single processor able to perform the functions of the respective units or devices 101-109.

The invention may also be implemented in a computer program for running on a computer system, at least including code portions for performing steps of a method according to the invention when run on a programmable apparatus, such as computer system or enabling a programmable apparatus to perform functions of a device or system according to the invention. Such a computer program may be provided on a data carrier, such as a CD-rom or diskette, stored with data loadable in a memory of a computer system, the data representing the computer program. The data carrier may further be a data connection, such as a telephone cable or a wireless connection transmitting signals representing a computer program according to the invention.

In the foregoing specification, the invention has been described with reference to specific examples of embodiments of the invention. However, various modifications and changes may be made therein. For example, information about postal tariff class applicable to the printed document may be transmitted to the franking machine or used to generate a mail manifest. The received and/or modified document data may contain an indication about which additional documents are to be assembled together with the printed document to a mail item. The total number of sheets of the document and additional documents (e.g. the total number of sheets in a mail item) may then be calculated and compared with the threshold value. However other changes or modifications are also possible. The specifications and drawings are, accordingly, to be regarded in an illustrative rather than in a restrictive sense.

## Claims

1. A document pre-processing unit for pre-processing documents to be printed, including:
a processor input for receiving document data at least representing content and, optionally, lay-out instructions of at least one document;
a computing unit connected to the processor input, for computing a number of sheets a physical document would include if printed in accordance with the document data;
a memory in which threshold information can be stored;
a comparing unit connected to the computing unit and the memory, for outputting a modify signal if the computed number exceeds a threshold determined from the threshold information;
a data modifying unit connected to the comparing unit, for reducing the computed number of sheets below the threshold by modifying the document data in response to the modify signal; and
a processor output connected to the data modifying unit for outputting the modified document data.

2. A pre-processing unit according to claim 1, wherein tariff information is stored in the memory, which tariff information represents at least two postal tariff classes, and wherein the comparing unit includes a first tariff selecting unit for selecting a desired postal tariff class from the memory.

3. A pre-processing unit according to claim 2, wherein the comparing unit includes:
a classifying unit for determining whether at least one document property satisfies the requirements of the desired postal tariff class, which document property is derivable from the computed number of sheets, which classifying unit has an output for outputting the modify signal in case this property does not satisfy the requirements; and
wherein the data modifying unit is arranged for bringing the property within the requirements of the desired postal tariff class by modifying the document data in response to the modify signal.

4. A pre-processing unit as claimed in claim 2 or 3, wherein the comparing unit includes:
a tariff determining unit for determining an current postal tariff class based on the computed number of sheets, and
a second tariff selecting unit for selecting between the current postal tariff class and the desired postal tariff class using a selection criterion based on the computed number of sheets, and outputting the modify signal to the data if the desired postal tariff class is selected.

5. A pre-processing unit according to claim 4, wherein the selection criterion is further based on at least a lower limit of a parameter range of mail items classified in the current postal tariff class and on an upper limit of a parameter range, such as a range of weights or sizes, of mail items classified in the desired postal class.

6. A pre-processing unit according to any one of claims 2-5, wherein the memory contains information about the costs of franking for at least two of the postal tariff classes, and the selecting unit is arranged to select a desired postal tariff class which has lower franking cost than the current franking class.

7. A pre-processing unit according to any one of claims 2-6, wherein the comparator includes a converter for converting a parameter value of at least the desired postal tariff classes to a threshold number of sheets, and wherein the comparator is arranged to output the modify signal if the computed number of sheets exceeds the threshold number of sheets.

8. A pre-processing unit according to any one of the preceding claims, wherein the threshold is based on an upper limit of the amount of sheets an inserter system is able to process.

9. A pre-processing unit according to any one of the preceding claims, wherein the document data includes information about preferred types of sheet-reducing modification.

10. A pre-processing unit according to claim 9, wherein the information includes at least one indication of at least one part of the document content to be preferentially modified or removed in response to the modify signal.

11. A pre-processing unit according to any one of the preceding claims, wherein the comparing unit includes a threshold unit for determining the threshold, and optionally wherein a threshold value is determined based on postal tariffs that would be applicable to a mail item, which mail item would include a physical document printed in accordance with the document data.

12. A pre-processing unit according to any one of the preceding claims, including a feedback output for outputting feedback data to a source of the received document data, said feedback data containing information about the modifications to the document data by the data modifying unit.

13. A pre-processing unit according to any one of the preceding claims, including a memory for storing the modified document data and/or information about a modifying operation performed by the data modifying unit.

14. A pre-processing unit according to any one of the preceding claims, wherein the received and/or modified document data contains an indication about which additional documents are to be assembled together with the printed document to a mail item.

15. A method for pre-processing documents to be printed, including:
receiving document data at least representing content and, optionally, lay-out instructions of at least one document;
computing a number of sheets a physical document would include if printed in accordance with the document data;
outputting a modify signal if a property of the computed number exceeds a threshold determined from the threshold information;
reducing the number of sheets required by the printed document by modifying the document data in response to the modify signal; and
outputting the modified document data.

16. A data carrier containing document data modified with a method or system according to any one of the preceding claims.

17. A document printed on sheets in accordance with document data modified with a method or system as claimed in any one of claims 1-15.

18. A system for generating mail items, including
a pre-processing unit as claimed in any one of claims 1-14;
a printer for printing a physical document in accordance with the modified document data;
an mail piece assembler, positioned in a processing direction of the at least one physical document downstream of the printer, for assembling the printed document, and optionally additional documents into a mail item; and
a franking unit, positioned downstream of the mail piece assembler, for franking the mail item with a franking value.

19. A system as claimed in claim 18, including:
a document generator for generating the document data.

20. A computer program product, including code portions for performing a method as claimed in claim 15 when running on a programmable apparatus.
